# EUROPEAN PATENT APPLICATION

(11) **EP 3 324 176 A1**
(43) Date of publication of application: **23.05.2018**
(21) Application number: 17201927.5
(22) Date of filing: 15.11.2017
(51) Int. Cl.: G01N 21/87

(54) **SYSTEM FOR IDENTIFYING A MULTIFACETED PRECIOUS STONE, IN PARTICULAR A DIAMOND, AND CORRESPONDING METHOD**

(30) Priority: 18.11.2016 IT 201600116642
(71) Applicant: DiamonDiamonD S.r.l., 00186 Roma (RM) (IT)
(72) Inventor: Caramelli, Antonio, 00186 Roma (IT); Bussa, Jean Luc, 00186 Roma (IT); Falcioni, Andrea, 00186 Roma (IT)
(74) Representative: Carangelo, Pierluigi

(57) **Abstract**

The present invention concerns a system for identifying a multifaceted precious stone (D), in particular a diamond.

In particular, said system comprises:
- image acquiring means (1),
- supporting means (2) for supporting said multifaceted precious stone (D),
- at least one lighting device (3),
- a database (4),
- a recognition unit (5), which is configured for:
° performing a comparison between said at least one image of said at least one facet (F₁, F₂...F_{N}) of said multifaceted precious stone (D), as acquired by said image acquiring means (1), and said at least one image of said one or more facets (F₁₁, F₁₂ ... F_{1N}; F₂₁, F₂₂ ... F_{2N}; F_{N1}, F_{N2} ... F_{NN}) of said predetermined precious multifaceted stones (D₁, D₂ ... D_{N}), in order to measure the degree of similarity between said at least one image acquired and each image of said one or more facets of said predetermined multifaceted precious stones,
° identifying an image of a facet (F₁₁, F₁₂... F_{1N}; F₂₁, F₂₂... F_{2N}; F_{N1}, F_{N2} ... F_{NN}) of one of said predetermined multifaceted precious stones (D₁, D₂ ... D_{N}) having the maximum degree of similarity with said at least one image of said at least one facet (F₁, F₂ ... F_{N}) of said multifaceted precious stone (D), as acquired by said image acquiring means (1), in such a way that said multifaceted precious stone (D) is identified by said comparison.

## Description

The present invention refers to a system for identifying a multifaceted precious stone, in particular a diamond.

More specifically, the invention refers to the structure of a system of the above type, which is able to identify a faceted precious stone, such as a diamond, by images relating to the surface of one or more facets of said multifaceted precious stone.

In the gemological sector, systems and methods have been developed to measure the characteristics of a diamond, such as cutting.

A system of the known type is based on a diamond analysis, which allows to obtain values relating to the proportions of the diamond itself which are expressed in percentage terms with respect to the proportions of a diamond considered to be ideal.

On the basis of these values, said first system of a known type provides as a result judgments relating to the cutting, symmetry and polishing of the diamond, according to one or more international standards.

There are different categories to which said first system of known type can be associated based on the diamond size.

By a camera, a plurality of images of the diamond to be examined are acquired, at the shoulders of which a light colored background is arranged, and from a processing of said images only information concerning the shape of the diamond are extracted as a function of the rotation of the support element whereon the diamond is placed.

However, a disadvantage of said first known system is given by the fact that it does not allow to univocally identify a diamond.

Furthermore, systems and methods have been developed to univocally identify a diamond.

A system of the known type to identify a diamond is based on the presence of an incision on the diamond girdle itself, made by a laser beam. This engraving can be carried out by a gemological institute once the diamond has been certified.

A first disadvantage of said second system of a known type is given by the fact that the engraving on a diamond alters the diamond itself.

A second disadvantage is given by the fact that the crown has a reduced height and consequently performing an incision on said crown is a complicated operation.

A third disadvantage is the fact that making such an incision has a cost.

A further disadvantage is the fact that when a diamond with an incision is embedded in a ring or a bracelet, reading the incision can be complicated.

Moreover, when a diamond is devoid of incision and is embedded in a ring or bracelet, it is not possible to perform the incision on the girdle of the diamond, without first extracting it from said ring or bracelet.

The object of the present invention is to overcome said disadvantages by providing a system for identifying a multifaceted precious stone, in particular a diamond, in a unique manner, which has a simple structure and a low production cost.

The invention therefore provides a system for identifying a multifaceted precious stone, in particular a diamond, wherein said system comprises:
- image acquiring means for acquiring one or more images relating to a surface of at least one facet of said multifaceted precious stone, wherein said image acquiring means have an optical axis,
- supporting means for supporting said multifaceted precious stone or an element provided with said multifaceted precious stone,
- at least one lighting device for lighting said at least one facet of said multifaceted precious stone, configured to emit at least one light radiation having light rays parallel or substantially parallel to each other, wherein said light radiation is emitted along a first axis or illumination (lighting) axis and said lighting device comprises at least one light source,
- a database in which the following are stored:
   - the unique identifying codes of one or more predetermined multifaceted precious stones,
   - at least one image relating to a surface of one or more facets of each of said predetermined multifaceted precious stones,
      ∘ a recognition unit for recognizing said multifaceted precious stone from the surface of at least one facet of said multifaceted precious stone, wherein said recognition unit is connected to said image acquiring means and to said lighting device, as well as to said database.

Said light source is a point-like or substantially point-like light source.

Said image acquiring means and said light source are arranged in such a way that a first angle formed between said first axis or illumination axis and a second axis, perpendicular to said facet, is equal to or substantially equal to a second angle formed between said optical axis of said image acquiring means and said second axis.

Said recognition unit is configured for:
- performing a comparison between said at least one image of said at least one facet of said multifaceted precious stone, acquired by said image acquiring means, and said at least one image of said one or more facets of said predetermined precious multifaceted stones, in order to measure the degree of similarity between said at least one image acquired and each image of said one or more facets of said predetermined multifaceted precious stones,
- identifying an image of a facet of one of said predetermined multifaceted precious stones having the maximum degree of similarity with said at least one image of said at least one facet of said multifaceted precious stone, as acquired by said image acquiring means, in such a way that said multifaceted precious stone is identified by said comparison.

In a first alternative, said lighting device comprises optical deflecting means configured to deflect at least a part of said light radiation in a direction in such a way that the rays of said light radiation are parallel or substantially parallel to each other, wherein said optical deflection means are arranged at a predetermined distance from said light source. It is preferred that said optical deflection means comprise a lens or a parabolic mirror.

In a second alternative, said light source can be arranged at a predetermined further distance from said multifaceted precious stone.

In a first embodiment of said system, said supporting means comprise a base on which said multifaceted precious stone or said element provided with said multifaceted precious stone is positioned, wherein said base lays on a first plane, and said system may comprise first rotating means for rotating said supporting means by a predetermined first angle around a third axis or rotation axis, perpendicular to said base; said recognition unit being connected to said first rotating means and configured to control said first rotating means.

Moreover, said system comprises a base element and said lighting device is connected to said base element by means of first connecting means so as to rotate on a second plane, orthogonal to said first plane.

In particular, said first connecting means comprise a first arm and a second arm, wherein each arm is rotatably connected to said base element so as to rotate about a fourth axis, perpendicular to said second plane, and is rotatably connected to said lighting device, so as to rotate about a fifth axis, parallel to said fourth axis; said lighting device being capable of rotating by a predetermined second angle between a third plane, whereon said base element lays, and a fourth plane passing for said two arms.

More particularly, said system comprises second rotating means and third rotating means for rotating said lighting device, wherein said second rotating means and said third rotating means are respectively connected to said first arm and to said second arm, and said recognition unit is connected to said second rotating means and to said third rotating means and is configured to control said second rotating means and said third rotating means independently of each other.

In a second embodiment of said system, said lighting device comprises optical reflecting means configured for reflecting a part of said at least a light radiation emitted by said light source, said optical reflecting means may preferably comprise a beam splitter. Moreover, said optical deflecting means are arranged between said light source and said optical reflecting means, and said lighting device is arranged inside a container, wherein said container has a first opening to allow said image acquiring means to be positioned in correspondence of said first opening, and a second opening, aligned with said first opening, to allow said part of light radiation reflected by said optical reflecting means to light said facet and to allow said image acquiring means to acquire one or more images of said facet.

With reference to said optical reflecting means, said optical reflecting means may be arranged between said first opening and said second opening so that said part of light radiation reflected by said optical reflecting means is directed toward said at least one facet through said second opening.

Moreover, said system comprises a base element (analogously to the first embodiment) and said container is connected by means of further connecting means to said base element so as to rotate on a second plane, orthogonal to said first plane, so that said optical axis is perpendicular to said facet.

In particular, said further connecting means comprise a further first arm and a further second arm, wherein each further arm may be rotatably connected to said base element so as to rotate about a sixth axis, perpendicular to said second plane, and is rotatably connected respectively to a third wall and to a fourth wall of said container, opposite to said first wall, so as to rotate about a seventh axis, parallel to said sixth axis and passing through said container.

More particularly, said system comprises fourth rotating means and fifth rotating means for rotating said container, wherein said fourth rotating means and said fifth rotating means are respectively connected to said further first arm and said further second arm, and in that said recognition unit is connected to said fourth rotating means and to said fifth rotating means and is configured to control said fourth rotating means and said fifth rotating means independently of each other.

In a third embodiment, differently from the second embodiment, said system comprises focusing means for focusing an image of a facet, arranged inside said container between said first opening and said optical reflecting means, said facet is the facet termed table, and said supporting means are configured to support said multifaceted precious stone in correspondence of its portion termed girdle and arranged inside said container.

In particular, said system can comprise:
▪■sixth rotating means, connected to said supporting means and configured to rotate said supporting means around an eighth axis in such a way that said multifaceted precious stone rotates in a third direction and in a fourth direction, opposite to said third direction, so that said table is inclined by a predetermined third angle, and seventh rotating means, connected to said sixth rotating means and configured to rotate said sixth rotating means about a ninth axis, perpendicular to said eighth axis, in such a way that said multifaceted precious stone rotates in a fifth direction and in a sixth direction, opposite to said fifth direction, so that said table is inclined by a predetermined fourth angle; wherein said eighth axis and said ninth axis are arranged on a same plane.

With reference to said sixth rotation means and said seventh rotation means, in a first alternative, said recognition unit is connected to said sixth rotating means and to said seventh rotating means and is configured to control said sixth rotating means and said seventh rotating means independently of each other.

In a second alternative, said sixth rotating means are manual rotating means and said seventh rotating means are manual rotating means.

The present invention also refers to a method for identifying a multifaceted precious stone, in particular a diamond, said method comprising the following steps:
A. providing image acquiring means having an optical axis,
B. providing a lighting device for lighting at least one facet of said multifaceted precious stone, configured to emit at least one light radiation having light rays parallel or substantially parallel to each other, wherein said light radiation is emitted along a first axis or illumination axis and said lighting device comprises at least one point-like or substantially point-like light source;
C. positioning said image acquiring means and said light source in such a way that a first angle formed between said first axis or illumination axis and a second axis, perpendicular to said facet, is equal or substantially equal to a second angle formed between said optical axis of said image acquiring means and said second axis,
D. emitting by the light source at least one light radiation onto said facet of said multifaceted precious stone,
E. acquiring one or more images relating to a surface of at least one facet of said multifaceted precious stone,
F. storing at least one image relating to a surface of one or more facets of one or more predetermined multifaceted precious stones;
G. performing a comparison between said at least one acquired image relating to said at least one facet of said multifaceted precious stone and said at least one image of said one or more facets of said predetermined multifaceted precious stones, in order to measure the degree of similarity between the at least one acquired image and each image of said one or more facets of said predetermined multifaceted precious stones;
H. identifying an image of a facet of said predetermined multifaceted precious stones having the maximum degree of similarity with said at least one acquired image relating to said at least one facet of said multifaceted precious stone, in such a way that said multifaceted precious stone is identified by said comparison.

The present invention will now be described, by way of illustration but not by way of limitation, according to its embodiments, with particular reference to the attached figures, wherein:
Figure 1 shows schematically a first embodiment of the system for identifying a diamond, object of the invention;
Figure 2 is a table in which is reported the diamond to be identified and its facets;
Figure 3 shows schematically a first angle formed by a first illumination axis or axis along which a light radiation is emitted and a second axis, perpendicular to a facet of a diamond, and a second angle formed by said second axis and optical axis of image acquiring means, of which said system is provided;
Figure 4 shows schematically the information contained in a database, of which the system is equipped;
Figure 5 shows schematically the recognition unit and the components which it is connected;
Figure 6 shows schematically a second embodiment of the system according to the invention;
Figure 7 schematically shows a third embodiment of the system according to the invention.

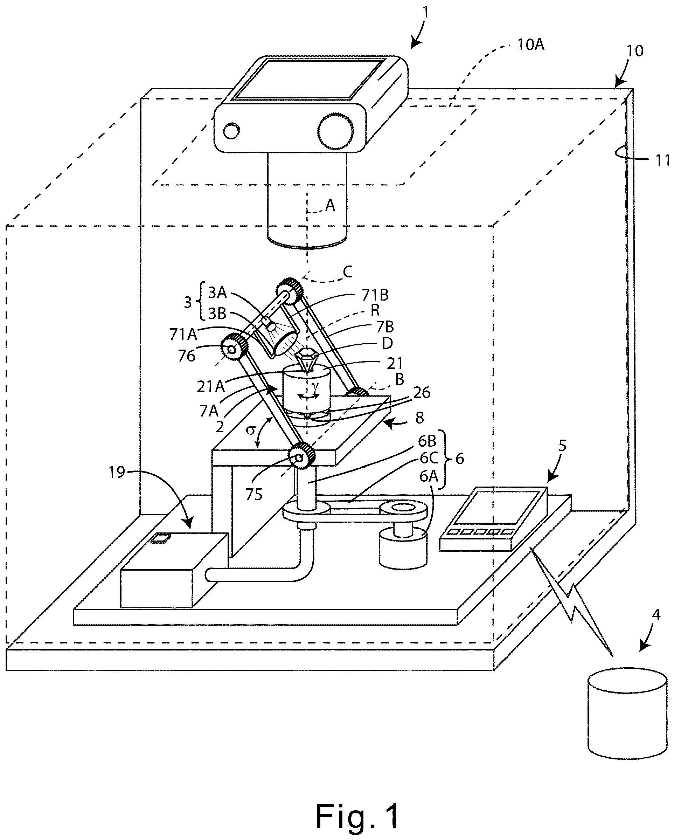

With particular reference to Figure 1, a first embodiment of a system for identifying a multifaceted precious stone, i.e. a precious stone provided with a plurality of facets, is described.

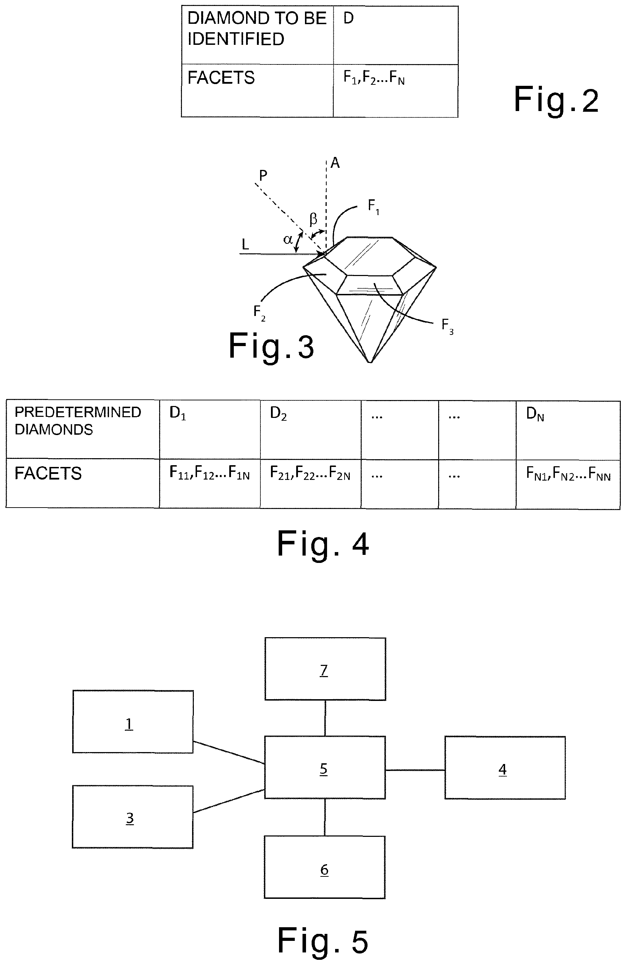

In particular, in the described example, said faceted stone to be identified is a diamond D having a plurality of facets F₁, F₂ ... F_{N} (Figure 2).

This system includes:
∘ image acquiring means 1 for acquiring one or more images relating to a surface of at least one facet F₁, F₂ ... F_{N} of said diamond D, wherein said image acquiring means 1 have an optical axis A,
∘ supporting means 2 for supporting said diamond D or an element provided with said diamond D, such as for example a ring,
∘ at least one lighting device 3 for lighting said diamond, configured to generate at least one light radiation having light rays parallel or substantially parallel to one another.

In the first embodiment, said image acquiring means 1 comprise a digital camera.

However, said image acquiring means 1 can comprise any instrument capable of acquiring an image in digital format.

With reference to said support means 2, said support means 2 are provided with a base 21 on which the diamond D or the element provided with said diamond D is arranged.

In particular, said base 21 has a seat 21A dimensioned and configured to house an end portion of said diamond.

In the first embodiment that is being described, said seat 21A houses a portion of diamond near the culet of the diamond itself, so that the diamond is in an upright position.

However, it is possible to position the diamond D in such a way that the facet of said diamond termed the table is arranged on said seat, without thereby departing from the scope of the invention.

It is preferable that said base 21 has a color such as to absorb light radiations, for example an opaque and dark color. In this way, when the surface of said at least one facet F₁, F₂ ... F_{N} is represented in the image acquired by said image acquiring means 1, the surface of said facet is distinct from the background of opaque and dark color.

With reference to the lighting device 3, in the first embodiment that is described, said lighting device 3 comprises at least one light source 3A for emitting said at least one light radiation.

In particular, said light source 3A is point-shaped or substantially point-shaped and said light source 3A and said image acquiring means are arranged in such a way that a first angle α is formed between a first axis or illumination axis L, i.e. the axis along which the light radiation is emitted from said light source, and a second axis P, perpendicular to said at least one facet F₁, F₂ ... F_{N}, is equal to or substantially equal to a second angle β formed between the optical axis A of said means for acquiring images 1 and said second axis P (Figure 3).

Said lighting axis L and said second axis P lay on the same reference plane.

Advantageously, when said first angle α is equal to or substantially equal to said second angle β, said image acquiring means 1 receive the maximum light radiation reflected from said at least one facet F₁, F₂ ... F_{N}.

In particular, thanks to the fact that said light source 3A is point-shaped or substantially point-shaped and to the position of said image acquiring means with respect to the light source itself, the planarity variations of a surface of any facet F₁, F₂ ... F_{N} with respect to a plane passing through said facet are shown in the images of one or more surfaces of said facet F₁, F₂ ... F_{N}, acquired by said image acquiring means 1, in that they cause a variation in brightness with respect to an average brightness value of the light radiation reflected from the facet.

Accordingly, in the images acquired by said image acquiring means, these planarity variations correspond to respective darker areas or lighter areas with respect to the remaining part of the facet surface.

Such flatness variations may be due to several factors.

For example, the fact that a surface of a facet of the diamond is not planar may be due to one or more imperfections of the diamond itself and/or to the diamond's polishing. In fact, it is possible that the facet has one or more recesses and/or one or more protruding portions.

Furthermore, a quantity of dust and/or dirt residues deposited on the surface of the facet may reduce the light radiation reflected by the facet and be interpreted as variations in planarity.

In this last case, it is advisable to clean the facet before acquiring the images of its surface and acquire the images in a dust-free environment or to alternate the image acquisition with the cleaning of the same facet and then average the acquired images (i.e. add up the brightness values pixel by pixel and divide by the number of images acquired) to reduce the error introduced by dust and/or dirt residues.

Moreover, said image acquiring means 1 can comprise a diaphragm having an aperture such as to obtain a depth of field, selected on the basis of the value of said second angle β so that, when the value of said second angle β increases, said depth of field increases, and, when the value of said second angle β decreases, said depth of field decreases.

The aperture of the diaphragm A is adjusted according to the dimensions of the facet of the diamond under examination.

In the first embodiment that is described, said lighting device comprises, in addition to said light source 3A, optical deflection means 3B configured to deviate at least a part of said at least one light radiation emitted by said light source 3A in a direction or preferential direction in such a way that the rays of said light radiation are parallel or substantially parallel to each other. Said optical deflection means 3B are arranged at a predetermined distance from said light source 3A.

It is preferable that said optical deviation means 3B comprise a lens or a parabolic mirror.

In the first embodiment, said optical deviation means comprise a lens.

However, said optical deflection means 3B are not necessary.

In fact, in an alternative (not shown), in order to obtain a light radiation with parallel or substantially parallel rays, it is possible to position the light source 3A (pointwise or substantially pointwise) at a predetermined further distance from said diamond D. This predetermined further distance it is selected in such a way that the light radiation emitted by said light source 3A has rays that are parallel or substantially parallel to each other.

This light source can be a micro-LED without an integrated lens, for example a micro LED SMD, preferably monochromatic, to improve the definition of the acquired images.

Said system further comprises a database 4 and a recognition unit 5 for recognizing a diamond D from the surface of at least one facet F₁, F₂ ... F_{N} of said diamond D, wherein said recognition unit 5 is connected to said database 4 through a communication channel that is wired or wireless.

Said database 4 can be positioned outside the recognition unit 5 or inside the recognition unit 5, without thereby departing from the scope of the invention.

In the first embodiment that is being described, said database 4 is external to said recognition unit 5.

In the database 4 the unique identification codes of one or more predetermined diamonds D₁, D₂ ... D_{N} and at least one image relating to a surface of one or more facets F1₁, F1₂ ... F1_{N}, F2₁, F2₂ ... F2_{N}, FN₁, FN₂ , FN_{N} of each of said predetermined diamonds D₁, D₂ ... D_{N} (figure 4) are stored.

The recognition unit 5 is connected to said image acquiring means 1, to said lighting device 3, as well as to said database 4 (as already said), and is configured for:
comparing said at least one image of said at least one facet F₁, F₂ ... F_{N}, acquired from said image acquiring means 1, and said at least one image of said one or more facets F1₁, F1₂ ... F1_{N}, F2₁, F2₂ ... F2_{N}, FN₁, FN₂ , FN_{N} of said predetermined diamonds D₁, D₂ ... D_{N} for measuring the degree of similarity between said at least one image acquired from said image acquiring means 1 and each image of said one or more facets F1₁, F1₂ ... F1_{N}, F2₁, F2₂ ... F2_{N}, FN₁, FN₂ , FN_{N} of said predetermined diamonds D₁, D₂ ... D_{N},
identifying an image of a facet F1₁, F1₂ ... F1_{N}, F2₁, F2₂ ... F2_{N}, FN₁, FN₂ , FN_{N} of one of said predetermined diamonds D₁, D₂ ... D_{N} having the maximum degree of similarity with said at least one image of said at least one facet F₁, F₂ ... F_{N} as acquired from said image acquiring means 1, so that said diamond D is identified from said comparison.

In particular, according to the invention, the comparison between the image(s) of the surface of at least one facet F₁, F₂ ... F_{N} of said diamond D, as acquired from said image acquiring means 1, and the image(s) of surfaces of one or more facets F₁₁, F₁₂ ... F1_{N}, F₂₁, F₂₂ ... F_{2N}, F_{N1}, F_{N2}, F_{NN} of said predetermined diamonds D₁, D₂ ... D_{N}, is based on the statistical correlation between said at least one image of said at least one facet F₁, F₂ ... F_{N}, as acquired from said image acquiring means 1, and said at least one image of said facets F₁₁, F₁₂ ... F_{1N}, F₂₁, F₂₂ ... F_{2N}, F_{N1}, F_{N2} , F_{NN} of said predetermined diamonds D₁, D₂ ... D_{N}.

In this specific case, the degree of similarity is the coefficient of statistical correlation between the image acquired by said image acquiring means 1 and the image stored in the database 4.

In an alternative, the comparison between the image(s) of the surface of at least one facet F₁, F₂ ... F_{N} of said diamond D, acquired from said image acquiring means 1, and the image(s) of surfaces of one or more facets F₁₁, F₁₂ ... F_{IN}, F₂₁, F₂₂ ... F_{2N}, F_{N1}, F_{N2} , F_{NN} of said predetermined diamonds D₁, D₂ ... D_{N}, may be based on the pixel by pixel subtraction between the image(s) of the surface of said at least facet F₁, F₂ ... F_{N} of said diamond D and the image (s) of surfaces of one or more facets F₁₁, F₁₂ ... F_{IN}, F₂₁, F₂₂ ... F_{2N}, F_{N1}, F_{N2} , F_{NN} of said predetermined diamonds D₁, D₂ ... D_{N}. In this alternative, the degree of similarity is given by the number of equal pixels.

In any case, the comparison between the image(s) of the surface of at least one facet F₁, F₂ ... F_{N} of said diamond D, acquired from said image acquiring means 1, and image(s) of surfaces of one or more facets F₁₁, F₁₂ ... F_{1N}, F₂₁, F₂₂ ... F_{2N}, F_{N1}, F_{N2} , F_{NN} of said predetermined diamonds D₁, D₂ ... D_{N} in order to measure the degree of similarity can be based on any method of a known type, without thereby departing from the scope of the invention.

In the first embodiment that is described, said system comprises first rotation means 6 for rotating said support means 2 of a predetermined first angle γ.

Said predetermined first angle γ is included in a predetermined first range of values between 0° and 360°.

Said supporting means 2 rotate about a third axis or axis of rotation R, perpendicular to said base 21.

In particular, said support means 2 can rotate in a first direction and in a second direction, opposite to said first direction.

Said recognition unit 5 is connected to said first rotation means 6 and is configured to control said first rotation means 6.

Said first rotation means 6 comprise a motor 6A, a rotor element 6B, coupled in rotation to said support means 2, and a motion transmission element 6C for transmitting the motion of said motor 6A to said rotor element 6B.

For example, said motion transmission element 6C may be a toothed belt. In this specific case, said rotor element 6B and said motor 6 must have a respective toothed portion to be meshed to said toothed belt.

In particular, said rotor element 6B is coupled in rotation with said support means 2 and a plurality of ball bearings 26 is interposed between said rotor element 6B and said support means 2.

Said system comprises positioning means 19 for positioning the diamond D on said support means 2 in a stable manner.

In the first embodiment that is described, said positioning means 19 are connected to said rotor element 6B and comprise a suction pump for sucking air.

Said supporting means 2 are provided with a first channel (not shown), having an end at said seat 21A on which the diamond D is positioned, and said rotor element 6B is provided with a second channel (not shown). In particular, said support means 2 and said rotor element 6B are arranged so that said first channel is aligned with said second channel, so that said first channel and said second channel form a conduit. In this way, said suction pump, connected to said rotor element 6B, sucks the air from said conduit, so as to maintain the diamond in position with respect to the support means.

In particular, the base 21 of said support means 2 lays on a first plane and said lighting device 3 (comprising said light source 3A and said optical deflection means 3B) is connected to a base element 8, above which said supporting means 2 are arranged, so as to rotate on a second plane, orthogonal to said first plane.

In the first embodiment that is described, said light source 3A is connected to said base element 8 by first connecting means.

Said first connection means comprise a first arm 7A and a second arm 7B.

Each arm 7A, 7B is rotatably connected to said base element 8 so as to rotate about a fourth axis B, perpendicular to said second plane, and is rotatably connected to said light source 3A, so as to rotate about a fifth axis C, parallel to said fourth axis B.

Said optical deflection means 3B are connected to said fifth axis C by means of second connection means so as to rotate when said fifth axis C rotates.

In the first embodiment that is described, said second connecting means comprise a first connecting element 71A and a second connecting element 71B, each of which has a first end coupled to said fifth axis C and a second end coupled to said means 3C of optical deviation.

In other words, said optical deviation means 3B are integral with said fifth axis C.

In this way, said light source 3A and consequently said optical deflection means 3B can rotate by a predetermined second angle θ between a third plane, on which said base element 8, and a fourth plane passing through said two arms 7A, 7B.

Said predetermined second angle θ may have a value within a predetermined second range of values, preferably comprised between 0° and 90°, and is selected such that said first angle α is equal or substantially equal to said second angle β.

Said system comprises second rotation means 75 and third rotation means 76 for rotating said light source 3A on said second plane.

In the first embodiment that is described, said second rotation means 75 and said third rotation means 76 are connected to a respective arm 7A, 7B. Said second means of rotation 75 and said third rotation means 76 can comprise respectively a first actuator and a second actuator, each of which may be, for example, a servomotor.

The recognition unit 5 is connected to said second rotational means 75 and to said third rotation means 76 and is configured to control said second rotation means and said third rotation means independently from each other.

Although shown partially in Figure 1, said system comprises a container 10 having an inner surface 11 with a color such as to absorb the light radiations incident on said inner surface 11, preferably an opaque and dark color.

Said container 10 has a first opening 10A to allow said image acquiring means 2 to be positioned at said first opening 10A.

In the first embodiment that is being described, at least said supporting means 2, said first rotation means 6, said at least one lighting device 3, said recognition unit 5, said positioning means 19, as well as said second rotation means 7 are arranged inside said container 10.

Figure 5 schematically shows the components to which the recognition unit 5 is connected.

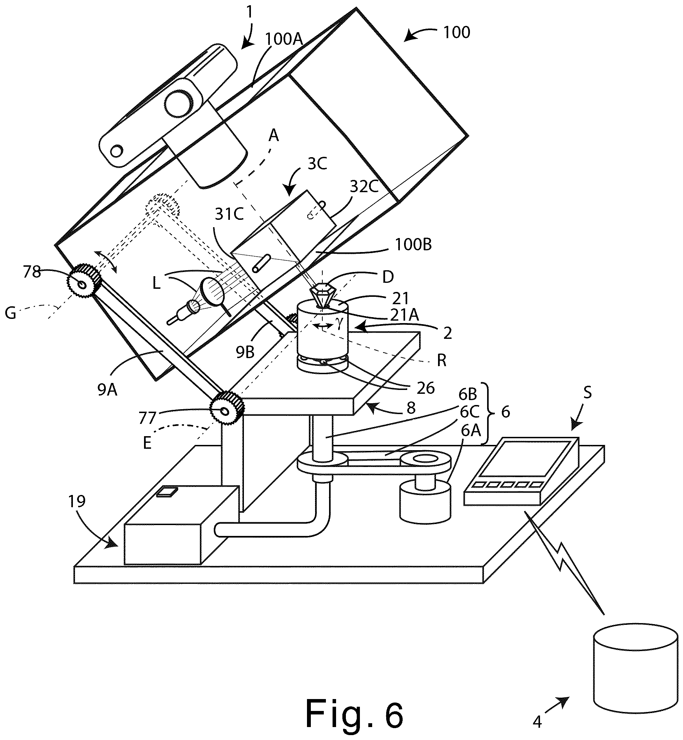

With reference to Figure 6, the second embodiment of the invention is shown.

In said second embodiment, the lighting device 3 comprises, beyond said light source 3A and said optical deflection means 3B, optical reflection means 3C configured to reflect a part of said at least one light radiation emitted by said light source 3A.

Said optical reflecting means 3C may comprise a beam splitter, i.e. an optical device capable of dividing a beam of light into two parts. Said beam splitter may comprise two coupled prisms or a semi-reflecting film or a glass having a semi-reflecting surface.

In particular, said optical reflection means 3C comprise a first surface 31C on which the light radiation emitted by the light source 3A of said lighting device 3 impinges (after having passed through said optical deviation means) and a second surface 32C, opposite said first surface 31C, wherein said second surface 32C has a color such as to absorb a further part of said light radiation emitted and incident thereon, preferably an opaque and dark color.

Said optical reflecting means 3C and said light source 3A are arranged in such a way that the light radiation reflected by said optical reflection means 3C impinges onto at least one facet F₁, F₂ ... F_{N} of said diamond D. In particular, said light radiation reflected from said optical reflecting means 3C is parallel to the optical axis A.

Although in the second embodiment that is being described the light radiation emitted by the light source 3A is perpendicular to the first surface 31C of said optical reflection means, it is not necessary for said light radiation to be perpendicular to said first surface 31C.

Unlike the first embodiment, only said lighting device 3 (comprising light source 3A, optical deflection means 3B and optical reflection means 3B) is arranged inside the container 100.

Moreover, said container 100 has a first opening 100A to allow said image acquiring means 1 to be positioned in correspondence with said first opening, as well as a second opening 100B, aligned with said first opening 100A, to allow the reflected light radiation from said optical reflecting means 3C to light at least one facet F₁, F₂ ... F_{N} of said diamond D and to allow said image acquiring means 1 to acquire one or more images of the surface of said facet.

In particular, said first opening 100A is arranged on a first wall 101 of said container 100 and said second opening 100B is arranged on a second wall 102 of said container 100, opposite to said first wall 101. In other words, said second opening 100B is at a predetermined first distance from said first opening 100A.

For this purpose, said optical reflection means 3C are arranged between said first opening 100A and said second opening 100B such that the reflected light radiation is directed towards at least one facet through the second aperture 100B.

In other words, by means of said second opening 100B a part of the light radiation is reflected by said optical reflection means 3C on a facet of diamond D and said image acquiring means 1 (whose optical axis A passes through said second opening 100B) acquire one or more images of this facet.

In particular, said image acquiring means 1 are arranged in such a way that the optical axis A is perpendicular to said at least one facet F₁, F₂ ... F_{N} of said diamond D.

In order to make the optical axis A orthogonal to a facet of said diamond D, it is possible to rotate not only said support means 2, but also said container 100.

In fact, said container 100 is connected to said base element 8 in such a way as to rotate on said second plane, orthogonal to said first plane (i.e. the plane on which said base 21 lays).

In the second embodiment that is being described, said container 100 is connected to said base element 8 by further connecting means.

Said further connecting means comprise a further first arm 9A and a further second arm 9B.

In particular, each further arm 9A, 9B is rotatably connected to said base element 8 so as to rotate around a sixth axis E, perpendicular to said second plane, and is rotatably connected to a third wall 103 and a fourth wall 104 of said container, opposite to said third wall 103, in such a way to rotate about a seventh axis G, parallel to said sixth axis E and passing through said container 100.

In this way, the container 100 can perform two possible rotations so that the optical axis A is perpendicular to a facet of the diamond D: a first rotation around said sixth axis E and a second rotation around said seventh axis G.

Said system comprises fourth rotation means 77 and fifth rotation means 78 for rotating said container 100 on said second plane.

In the second embodiment that is being described, said fourth rotation means 77 and said fifth rotation means 78 are connected to a respective further arm 9A, 9B. Said fourth rotation means 77 and said fifth rotation means 78 may comprise respectively a third actuator and a fourth actuator, each of which may be, for example, a servomotor.

The recognition unit 5 is connected to said fourth rotation means 77 and to said fifth rotation means 78 and is configured to control said fourth rotation means and said fifth rotation means independently from each other.

By rotating said container 100 and rotating said support means 2, it is possible to orientate the optical axis A so that said optical axis A is perpendicular to the facet of interest of the diamond, whose image is to be acquired.

Moreover, by rotating said support means 2, it is possible to position the diamond D with respect to the image acquiring means 1 in such a way that said image acquiring means 1 acquire the image of each facet of interest.

Therefore, with reference to a facet of interest, thanks to the rotation of said support means 2 and to the rotation of the container 100, it is possible to position said diamond D in such a way that said facet of interest is illuminated and one or more images of it are acquired from said image acquiring means 1, whose optical axis A is perpendicular to said facet of interest.

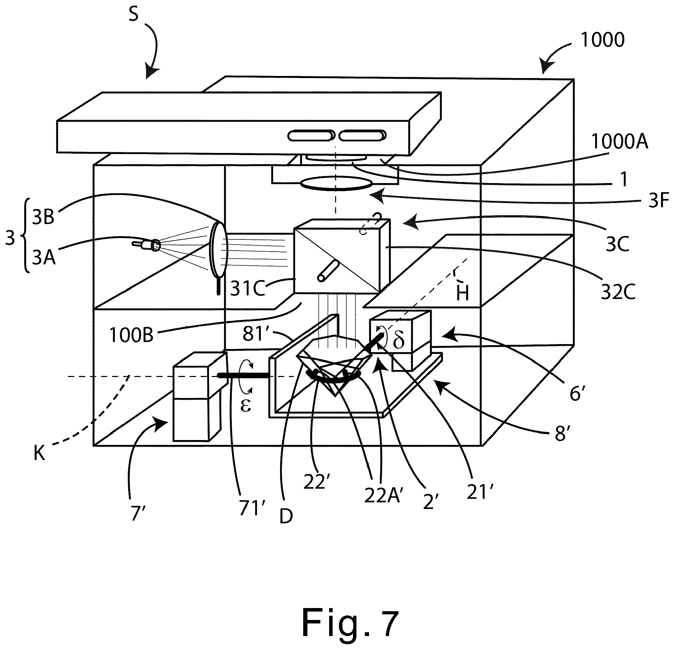

Figure 7 refers to a third embodiment of the system.

In the third embodiment that is here described, said image acquiring means 1 are arranged inside a mobile phone or smartphone S.

In other words, said image acquiring means 1 is the digital camera of said mobile phone or smartphone S.

Differently from the second embodiment described above, said system comprises focusing means 3F for focusing an image of a facet of the diamond, arranged inside the container 1000, between a first aperture 1000A and said optical reflecting means 3C.

Said optical reflecting means 3C, similarly to the second embodiment, are arranged between a first opening 1000A and a second opening 1000B, aligned with said first opening 1000A. Said second opening 1000B is at a predetermined second distance from said first opening 1000A.

Moreover, similarly to what has been said for the second embodiment, it is not necessary for the light radiation emitted by the light source 3A to be perpendicular to the first surface 31C of said optical reflection means 3C.

In the third embodiment that is described, said focusing means 3F comprise a lens. However, said focusing means 3F may comprise a lens assembly, without thereby departing from the scope of the invention.

Moreover, said support means 2' are configured to support said diamond D at a portion of said diamond termed girdle and said system comprises sixth rotation means 6' and seventh rotation means 7' to rotate diamond D in such a way that the optical axis A of the image acquiring means 1 is perpendicular to the table of said diamond.

In particular, said sixth rotation means 6' are connected to said support means 2' and configured to rotate said support means 2' about an eighth axis H in such a way that the diamond D rotates in a third direction and in a fourth direction, opposite to said third direction, so that the table of said diamond is inclined by a predetermined third angle δ.

Said sixth rotation means 6' are arranged on a base element 8'.

Said seven rotational means 7' are connected (directly or indirectly) to said sixth rotation means 6' and configured to rotate said sixth rotation means 6' about a ninth axis K, perpendicular to said eighth axis H, in such a way that the diamond D rotates in a fifth direction and in a sixth direction opposite to said fifth direction, so that the table of said diamond is inclined by a predetermined fourth angle ε.

In particular, said eighth axis H and said ninth axis K lay on the same plane.

In other words, when said sixth rotation means 6' are rotated by said seventh rotation means 7', said diamond D and said base element 8' rotate around said ninth axis K.

In the third embodiment that is described, said support means 2' comprise a first straight portion 21' and a second portion or curved end portion 22'.

Said first portion 21' is oriented along said eighth axis H and connected to said sixth rotation means 6' and said second portion 22' is provided with locking means 22A' for locking said diamond D in position, so that said diamond D is in an upright position.

In the described embodiment, said locking means 22A' comprise one or more hooks for hooking said diamond D.

However, said locking means 22A may comprise one or more screw supports or be magnetic-type blocking means, without thereby departing from the scope of the invention.

Said base element 8 comprises a first wall 81', arranged on a plane orthogonal to said ninth axis K, and said seventh support means 7' comprise a first rectilinear portion 71' oriented along said ninth axis K and connected to said first wall 81'.

Moreover, said sixth rotation means 6' and said seven rotation means 7' can comprise respectively a fifth actuator and a sixth actuator, each of which may be, for example, a servomotor. In this specific case, the recognition unit 5 (not shown) is connected to said sixth rotation means 6' and to said seven rotation means 7' and is configured to control said sixth rotation means 6' and said seventh means of rotation 7' independently from each other.

However, said sixth rotation means 6' and said seventh rotational means 7' can be manual rotation means, so that a user can rotate the diamond D until the diamond table is in a position such that the optical axis A of said acquiring means 1 is perpendicular to said table. The user realizes that the optical axis A is perpendicular to the diamond table by the reflection of the light radiation on the acquired image.

Moreover, said supporting means 2', said sixth rotation means 6' and said seventh rotation means 7' are arranged inside said container 1000.

The present invention also refers to a method for identifying a diamond.

Said method comprises the following steps:
A.providing image acquiring means 1 having an optical axis A;
B.providing a lighting device 3 for lighting at least one facet F₁, F₂ ... F_{N} of said multifaceted precious stone D, configured to emit at least one light radiation having light rays parallel or substantially parallel to one another, wherein said light radiation is emitted along a first axis or axis of illumination L and said lighting device 3 comprises at least one point-shaped or substantially point-shaped light source 3A;
C.positioning said image acquiring means 1 and said light source 3A in such a way that a first angle α formed between said first axis or illumination axis L and a second axis P, perpendicular to said facet F₁, F₂ ... F_{N}, is equal or substantially equal to a second angle β formed between said optical axis A of said image acquiring means 1 and said second axis P;
D.emitting at least one light radiation onto said facet F₁, F₂ ... F_{N} of said multifaceted precious stone D;
E. acquiring one or more images relating to a surface of at least one facet F₁, F₂ ... F_{N} of said diamond D;
F.storing at least one image relating to a surface of one or more facets F₁₁, F₁₂ ... F_{1N}; F₂₁, F₂₂ ... F_{2N}; F_{N1}, F_{N2}, F_{NN} of one or more predetermined diamonds D₁, D₂ ... D_{N};
G.comparing said at least one acquired image relative to said at least one facet F₁, F₂ ... F_{N} and said at least one image of said one or more facets F₁₁, F₁₂ ... F_{1N}; F₂₁, F₂₂ ... F_{2N}; F_{N1}, F_{N2}, F_{NN} of said predetermined diamonds D₁, D₂ ... D_{N}, to measure the degree of similarity between said at least one acquired image and each image of said one or more facets F₁₁, F₁₂ ... F_{N}; F_{21,} F₂₂ ... F_{2N}; F_{N1}, FN₂, FN_{N} of said predetermined diamonds D₁, D₂ ... D_{N};
H. identifying an image of a facet F₁₁, F₁₂ ... F_{1N}; F₂₁, F₂₂ ... F_{2N}; F_{N1}, F_{N2}, F_{NN} of said predetermined diamonds D₁, D₂ ... D_{N} having the maximum degree of similarity with said at least one image acquired such that said diamond D is identified by said comparison.

Advantageously, as already said, said system has a simple structure and allows to identify a multifaceted precious stone, in particular a diamond, in a unique way.

A second advantage is given by the fact that, if one or more images of one or more facets of a multifaceted precious stone are stored in a database, to which a gemological certificate and a certificate of identification have already been associated, the latter issued following the identification of the diamond by means of the system subject-matter of the present invention, in the case in which this multifaceted stone has been stolen and the theft has been reported to a competent authority, it will not be necessary to issue an additional certificate of identification since the system allows to recognize that a certificate of identification had already been associated to the same multifaceted precious stone. This is due to the fact that the images of one or more facets of said multifaceted stone were already stored in the database.

A further advantage is that, if the gemological certificate has been lost, the owner of the multifaceted stone can request a duplicate of the gemological certificate from the same certification institute that issued it, providing the certificate of identification, without the need for the multifaceted stone to be subjected to a new gemological analysis by an expert, so as to reduce time and costs.

The present invention has been described by way of illustration, but not by way of limitation, according to its preferred embodiments, but it is to be understood that variations and/or modifications may be made by those skilled in the art without departing from the relative scope of protection, as defined by the attached claims.

## Claims

1. System for identifying a multifaceted precious stone (D), in particular a diamond, where said system comprises:
- image acquiring means (1) for acquiring one or more images relating to a surface of at least one facet (F₁,F₂...F_{N}) of said multifaceted precious stone (D), wherein said image acquiring means (1) have an optical axis (A),
- supporting means (2) for supporting said multifaceted precious stone (D) or an element provided with said multifaceted precious stone (D),
- at least one lighting device (3) for lighting said at least one facet (F₁,F₂...F_{N}) of said multifaceted precious stone (D), configured to emit at least one light radiation having light rays parallel or substantially parallel to each other, wherein said light radiation is emitted along a first axis or illumination axis (L) and said lighting device (3) comprises at least one light source (3A),
- a database (4) in which the following are stored:
• the unique identifying codes of one or more predetermined multifaceted precious stones (D₁,D₂ ...D_{N}),
• at least one image relating to a surface of one or more facets (F₁₁,F₁₂...F_{1N}; F₂₁,F₂₂...F_{2N}; F_{N1},F_{N2}...F_{NN}) of each of said predetermined multifaceted precious stones (D₁,D₂ ...D_{N}),
- a recognition unit (5) for recognizing said multifaceted precious stone (D) from the surface of at least one facet (F₁,F₂...F_{N}) of said multifaceted precious stone (D), wherein said recognition unit (5) is connected to said image acquiring means (1) and to said lighting device (3), as well as to said database (4), wherein:
said light source (3A) is a point-like or substantially point-like light source,
Said image acquiring means (1) and said light source (3A) are arranged in such a way that a first angle (α) formed between said first axis or illumination axis (L) and a second axis (P), perpendicular to said facet (F₁,F₂ ...F_{N}), is equal or substantially equal to a second angle (β) formed between said optical axis (A) of said image acquiring means (1) and said second axis (P), and
Said recognition unit (5) is configured for:
- performing a comparison between said at least one image of said at least one facet (F₁,F₂...F_{N}) of said multifaceted precious stone (D), as acquired by said image acquiring means (1), and said at least one image of said one or more facets (F₁₁,F₁₂...F_{1N}; F₂₁,F₂₂...F_{2N}; F_{N1},F_{N2}...F_{NN}) of said predetermined precious multifaceted stones (D₁,D₂...D_{N}), in order to measure the degree of similarity between said at least one image acquired and each image of said one or more facets of said predetermined multifaceted precious stones,
- identifying an image of a facet (F₁₁,F₁₂...F_{1N}; F₂₁,F₂₂... F_{2N}; F_{N1},F_{N2}...F_{NN}) of one of said predetermined multifaceted precious stones (D₁,D₂...D_{N}) having the maximum degree of similarity with said at least one image of said at least one facet (F₁,F₂... F_{N}) of said multifaceted precious stone (D), as acquired by said image acquiring means (1), in such a way that said multifaceted precious stone (D) is identified by said comparison.

2. System according to claim 1, **characterized in that** said lighting device (3) comprises optical deflecting means (3B) configured to deflect at least a part of said light radiation in a direction in such a way that the rays of said light radiation are parallel or substantially parallel to each other, wherein said optical deflection means (3B) are arranged at a predetermined distance from said light source (3A); said optical deflection means (3B) comprising a lens or a parabolic mirror.

3. System according to claim 1, **characterized in that** said light source is arranged at a predetermined further distance from said multifaceted precious stone (D).

4. System according to any previous claim, **characterized in that** said supporting means (2) comprise a base (21) on which said multifaceted precious stone (D) or said element provided with said multifaceted precious stone (D) is positioned, wherein said base (21) lays on a first plane, and **in that** said system comprises first rotating means (6) for rotating said supporting means (2) by a predetermined first angle (γ) around a third axis or rotation axis (R), perpendicular to said base (21); said recognition unit (5) being connected to said first rotating means (6) and configured to control said first rotating means (6).

5. System according to any previous claim, **characterized in that** said system comprises a base element (8) and **in that** said lighting device (3) is connected to said base element (8) by means of first connecting means (7A, 7B) so as to rotate on a second plane, orthogonal to said first plane.

6. System according to the previous claim, **characterized in that** said first connecting means (7A, 7B) comprise a first arm (7A) and a second arm (7B), wherein each arm (7A, 7B) is rotatably connected to said base element (8) so as to rotate about a fourth axis (B), perpendicular to said second plane, and is rotatably connected to said lighting device (3), so as to rotate about a fifth axis (C), parallel to said fourth axis (B); said lighting device (3) being capable of rotating by a predetermined second angle (θ) between a third plane, whereon said base element(8) lays, and a fourth plane passing for said two arms (7A, 7B).

7. System according to the previous claim, **characterized in that** said system comprises second rotating means (75) and third rotating means (76) for rotating said lighting device (3), wherein said second rotating means (75) and said third rotating means (76) are respectively connected to said first arm (7A) and to said second arm (7B), and said recognition unit (5) is connected to said second rotating means (75) and to said third rotating means (76) and is configured to control said second rotating means (75) and said third rotating means (76) independently of each other.

8. System according to any previous claim 1-4, **characterized in that**
said lighting device (3) comprises optical reflecting means (3C) configured for reflecting a part of said at least a light radiation emitted by said light source (3A), said optical reflecting means (3C) comprising a beam splitter;
and **in that**
said optical deflecting means (3B) are arranged between said light source (3A) and said optical reflecting means (3C),
and **in that**
said lighting device (3) is arranged inside a container (100; 1000), wherein said container (100; 1000) has a first opening (100A; 1000A) to allow said image acquiring means (1) to be positioned in correspondence of said first opening (100A; 1000A), and a second opening (100B; 1000B), aligned with said first opening (100A; 1000A), to allow said part of light radiation reflected by said optical reflecting means (3C) to light said facet (F₁,F₂...F_{N}) and to allow said image acquiring means (1) to acquire one or more images of said facet (F₁,F₂...F_{N});
wherein said optical reflecting means (3C) are arranged between said first opening (100A; 1000A) and said second opening (100B; 1000B) so that said part of light radiation reflected by said optical reflecting means (3C) is directed toward said at least one facet (F₁,F₂...F_{N}) through said second opening (100B; 1000B).

9. System according to claims 4 and 8, **characterized in that** said system comprises a base element (8) and **in that** said container (100) is connected by means of further connecting means (9A; 9B) to said base element (8) so as to rotate on a second plane, orthogonal to said first plane, so that said optical axis (A) is perpendicular to said facet.

10. System according to the previous claim, **characterized in that** said further connecting means (9A, 9B) comprise a further first arm (9A) and a further second arm (9B), wherein each further arm (9A; 9B) is rotatably connected to said base element (8) so as to rotate about a sixth axis (E), perpendicular to said second plane, and is rotatably connected respectively to a third wall (103) and to a fourth wall (104) of said container, opposite to said third wall (103), so as to rotate about a seventh axis (G), parallel to said sixth axis (E) and passing through said container (100).

11. System according to the previous claim, **characterized in that** said system comprises fourth rotating means (77) and fifth rotating means (78) for rotating said container (100), wherein said fourth rotating means (77) and said fifth rotating means (78) are respectively connected to said further first arm (9A) and said further second arm (9B), and **in that** said recognition unit (5) is connected to said fourth rotating means (77) and to said fifth rotating means (78) and is configured to control said fourth rotating means (77) and said fifth rotating means (78) independently of each other.

12. System according to claims 2 and 8 or 3 and 8, **characterized in that**
said system comprises focusing means (3F) for focusing an image of a facet (F₁,F₂...F_{N}), arranged inside said container (1000) between said first opening (1000A) and said optical reflecting means (3C),
and **in that**
said facet (F₁,F₂...F_{N}) is the facet termed table,
and **in that**
said supporting means (2') are configured to support said multifaceted precious stone (D) in correspondence of its portion termed girdle and arranged inside said container (1000).

13. System according to the previous claim, **characterized in that** said system comprises:
- sixth rotating means (6'), connected to said supporting means (2') and configured to rotate said supporting means (2') around an eighth axis (H) in such a way that said multifaceted precious stone (D) rotates in a third direction and in a fourth direction, opposite to said third direction, so that said table is inclined by a predetermined third angle (δ), and
- seventh rotating means (7'), connected to said sixth rotating means (7') and configured to rotate said sixth rotating means (6') about a ninth axis (K), perpendicular to said eighth axis (H), in such a way that said multifaceted precious stone (D) rotates in a fifth direction and in a sixth direction, opposite to said fifth direction, so that said table is inclined by a predetermined fourth angle (ε);
wherein said eighth axis (H) and said ninth axis (K) are arranged on a same plane.

14. System according to claim 13, **characterized in that** said recognition unit (5) is connected to said sixth rotating means (6') and to said seventh rotating means (7') and is configured to control said sixth rotating means (6') and said seventh rotating means (7') independently of each other.

15. System according to claim 13, **characterized in that** said sixth rotating means (6') are manual rotating means and said seventh rotating means (7') are manual rotating means.

16. Method for identifying a multifaceted precious stone (D), in particular a diamond, said method comprising the following steps:
A. providing image acquiring means (1) having an optical axis (A),
B. providing a lighting device (3) for lighting at least one facet (F₁,F₂...F_{N}) of said multifaceted precious stone (D), configured to emit at least one light radiation having light rays parallel or substantially parallel to each other, wherein said light radiation is emitted along a first axis or illumination axis (L) and said lighting device (3) comprises at least one point-like or substantially point-like light source (3A);
C. positioning said image acquiring means (1) and said light source (3A) in such a way that a first angle (α) formed between said first axis or illumination axis (L) and a second axis (P), perpendicular to said facet (F₁,F₂ ...F_{N}), is equal or substantially equal to a second angle (β) formed between said optical axis (A) of said image acquiring means (1) and said second axis (P);
D. emitting by said light source (3A) at least one light radiation onto said facet (F₁,F₂...F_{N}) of said multifaceted precious stone (D),
E. acquiring one or more images relating to a surface of at least one facet (F₁,F₂...F_{N}) of said multifaceted precious stone (D),
F. storing at least one image relating to a surface of one or more facets (F₁₁, F₁₂...F_{1N}; F₂₁,F₂₂...F_{2N}; F_{N1},F_{N2}...F_{NN}) of one or more predetermined multifaceted precious stones (D₁,D₂...D_{N});
G. performing a comparison between said at least one acquired image relating to said at least one facet (F₁,F₂...F_{N}) of said multifaceted precious stone and said at least one image of said one or more facets (F₁₁,F₁₂...F_{1N}; F₂₁,F₂₂...F_{2N}; F_{N1}, F_{N2}...F_{NN}) of said predetermined multifaceted precious stones (D₁,D₂...D_{N}), in order to measure the degree of similarity between the at least one acquired image and each image of said one or more facets (P₁₁, F₁₂...F_{1N}; F₂₁, F₂₂... F_{2N}; F_{N1}, F_{N2}...F_{NN}) of said predetermined multifaceted precious stones (D₁, D₂...D_{N}) ;
H. Identifying an image of a facet (F₁₁, F₁₂...F_{1N}; F₂₁, F₂₂...F_{2N}; F_{N1}, F_{N2}...F_{NN}) of said predetermined multifaceted precious stones (D₁,D₂...D_{N}) having the maximum degree of similarity with said at least one acquired image relating to said at least one facet (F₁,F₂...F_{N}) of said multifaceted precious stone (D), in such a way that said multifaceted precious stone (D) is identified by said comparison.
